# EUROPÄISCHE PATENTSCHRIFT

(11) **EP 2 085 675 B1**
(45) Veröffentlichungstag und Bekanntmachung des Hinweises auf die Patenterteilung: **12.05.2010**
(21) Anmeldenummer: 08001856.7
(22) Anmeldetag: 31.01.2008
(51) Int. Cl.: F16L 21/06, F16L 23/08

(54) **Pumpvorrichtung**
Pump device
Dispositif de pompage

(43) Veröffentlichungstag der Anmeldung: 05.08.2009
(73) Patentinhaber: MAT Mischanlagentechnik GmbH, 87509 Immenstadt-Seifen (DE)
(72) Erfinder: Kleimeier, Manfred, 87527 Sonthofen (DE); Machaczek, Alexander Dipl. Ing., 87437 Kempten (DE)
(74) Vertreter: Wunderlich, Rainer

(56) Entgegenhaltungen:
- FR-A- 2 697 893
- GB-A- 305 609
- GB-A- 2 243 659
- US-A- 2 818 055
- US-A- 3 687 487
- US-A1- 2003 127 854

## Beschreibung

Die Erfindung betrifft eine Pumpvorrichtung zum Pumpen eines feststoffhaltigen, aushärtenden Mediums, mit einem Gehäuse, in dem ein Verdrängerkolben oder ein Tauchkolben zum Fördern des Mediums angeordnet ist, gemäß dem Oberbegriff des Patentanspruchs 1.

Zur Verbindung zweier auf Stoß anliegender Zylinderteile werden häufig Flanschverbindungen eingesetzt. Hierzu ist es jedoch erforderlich, dass an den anliegenden Zylinderteilen ein entsprechender Flansch ausgebildet ist. Über eine Vielzahl von Schraubverbindungen entlang des Umfangs des Flansches können so die beiden Flansche gegeneinander gespannt werden. Neben einer speziellen Ausbildung der Zylinderteile mit einem Flansch sind daher eine Vielzahl von Schraubverbindungen vorzusehen und zu betätigen.

Eine weitere lösbare Verbindung derartiger auf Stoß anliegender Zylinderteile besteht in der Verwendung einer sogenannten Überwurfmutter. Für diese Verbindungsvorrichtung sind an zumindest einem der Zylinderteile Gewindegänge vorzusehen, während an dem anderen Zylinderteil zumindest eine Auskragung ausgebildet ist. Da die Größe der Überwurfmutter vom Durchmesser der zu verbindenden Zylinderteile abhängt, ist diese Verbindungsvorrichtung nur für relativ kleine Zylinderdurchmesser wirtschaftlich. Für größere Durchmesser müssten spezielle Überwurfmuttern gefertigt werden, wobei zudem zu deren Betätigung Spezialschlüssel erforderlich wären.

- Zur Rohrverbindung sind auch sogenannte Spannschellen bekannt. Hierbei wird ein relativ dünnwandiges Rohr bereichsweise über das zu verbindende andere Rohr geschoben. Mit einer umgebenden Spannschelle wird dann das Außenrohr so durchmesserverringert wird, dass eine kraftschlüssige Verbindung entsteht.

FR-A-2 697 893 beschreibt eine Flanschverbindung zur lösbaren zentrischen Verbindung von Rohren oder Maschinenbauteilen mit konischen Spannflächen mit zwei Flanschen. Die Flansche dienen als steifes Verbindungselement zwischen Rohrleitungen, Apparaten oder Maschinen. Am Umfang der Flansche sind Verspannmittel angeordnet, wie axial spannende Schraubverbindungen. Die Flanschverbindung weist einen aus mehreren Ringstücken bestehenden Spannring auf, die mittels in Umfangrichtung verspannbarer Glieder die gepaarten Flansche verspannen können. Um in loser Verbindung der Ringstücke den Spannring an den Flanschen in Umfangsrichtung verschieben zu können, weist der Spannring einen gegenüber dem Kontaktdurchmesser der Flansche größeren Durchmesser auf.

GB-A-2 243 659 offenbart eine segmentierte Rohrklemme mit zwei Belastungsschultern. Diese Klemme wird verwendet, um zwei Leitungen an ihrem Ende miteinander zu verbinden. Jede Leitung weist ein Paar von im Wesentlichen parallelen Belastungsschultern auf, die sich um die Leitung herum erstrecken und axial voneinander beabstandet sind. Die Klemme weist zwei Sätze von Belastungsschultern zum Wirkeingriff jeden Satzes der Belastungsschulter mit jedem Leitungsende auf. Die Klemme ist in zwei Hälften aufgeteilt, die im zusammengeschraubten Zustand die Enden der Leitungen zueinander zieht.

US-A-3 687 487 beschreibt eine Rohrverbindung mit einem Klemmring. Der Klemmring weist intern Rillen und Rippen auf, die zu externen Rillen und Rippen zweier zu verbindender Elemente komplementär sind. Die Rillen und Rippen tragen jeweils Nockenbahnen, die eine longitudinale Bewegung der zwei verbindbaren Elemente aufeinander zu in Folge einer radialen Kontraktion des Klemmrings bewirken, wodurch eine Abdichtung zwischen den verbindbaren Elementen erzeugt wird.

US-A-2 818 055 offenbart einen Verbrennungsmotor mit einem Kurbelgehäuse und einem Zylinder, die benachbarte koaxiale rohrförmige Abschnitte aufweisen. Diese Abschnitte weisen axial beabstandete, radial ausgedehnte endständige Oberflächen auf,
wobei jeder der Abschnitte eine Mehrzahl von nach außen gerichteten Kerbungen aufweist.

Ein geteilter Klemmring umgibt die rohrförmigen Abschnitte des Kurbelgehäuses und des Zylinders. Der Klemmring weist beabstandete Gruppen von Einkerbungen auf, die mit den Einkerbungen auf den Abschnitten des Kurbelgehäuses und des Zylinders in Eingriff stehen. Durch die dazwischen anliegende Belastungskraft wird der Klemmring auf den rohrförmigen Abschnitten abdichtend befestigt.

GB-A-305 609 beschreibt Vorrichtungen zum Verbinden zweier Leitungsabschnitte, die extern konische Schultern aufweisen. Ferner ist ein gerillter oder angeflanschter Klemmring vorgesehen, der mit den Schultern in einer Wirkverbindung steht und dazu angepasst ist, die beiden Teile zu einer dichten Verbindung zusammenzuziehen. Eine ringförmige Vertiefung oder ein Kanal kann in jedem Leitungsabschnitt ausgebildet sein,
wobei dieser Kanal an seinen beiden Kanten oder Seiten ausgespreizt oder abgeschrägt ist, und die Neigung der Oberfläche, welche der angrenzenden Seite der Verbindung am nächsten ist, steiler ist als die der Verbindung fernstehenden Seite und dabei eine Schulter gegen einen Flansch der Ringpassungen bildet.

US 2003/127 854 A1 offenbart ein modulares System zum Anpassen eines Auslegerbetonleitungssystem in ein Betonleitungspumpsystem, das einen 90°-Rohrkrümmer verwendet, welcher mit dem Pumpenauslass verbunden ist, so dass der Betonstrom von dem Auslass nach unten geleitet wird. Ein zweiter 90°-Rohrkrümmer ist schwenkbar an dem ersten Rohrkrümmer befestigt, so dass die Betonstromrichtung selektiv in einer horizontalen Ebene angeordnet werden kann. Der zweite Rohrkrümmer weist zudem an seinem äußersten Ende einen reduzierten Durchmesser auf.

Der Erfindung liegt die **Aufgabe** zugrunde, eine Pumpvorrichtung mit einer Verbindungseinrichtung zu schaffen, welche bei einem einfachen Aufbau und einfacher Handhabung eine zuverlässige Verbindung ermöglicht.

Die Aufgabe wird nach der Erfindung durch eine Pumpvorrichtung mit den Merkmalen des Patentanspruchs 1 gelöst. Bevorzugte Ausführungsformen der Erfindung sind in den abhängigen Ansprüchen angegeben.

- Die erfindungsgemäße Pumpvorrichtung ist dadurch gekennzeichnet, dass der Spannkörper eine axiale Breite aufweist, mit der sich der Spannkörper über die Stoßstelle hinweg auf beide Zylinderteile erstreckt, und dass an einer Innenseite des ringförmigen Spannkörpers Vorsprünge und/oder Ausnehmungen ausgebildet sind, welche zum Eingreifen in korrespondierende Ausnehmungen bzw. Vorsprünge an den Zylinderteilen ausgebildet sind.

Ein Grundgedanke der Erfindung liegt darin, eine Pumpvorrichtung mit einer Verbindungsvorrichtung ähnlich wie eine Spannschelle vorzusehen. Die Verbindungsvorrichtung umfasst einen Spannkörper, welcher ähnlich einer ein- oder mehrteiligen Spannschelle hinsichtlich seines Durchmessers an den Durchmesser der zu verbindenden Zylinderteile angepasst ist. Dies bedeutet, dass der Spannkörper in seinem entspannten Zustand durchmessergrößer als der Durchmesser der Zylinderteile ist. Über die Spanneinrichtung an einer Öffnung oder einem Durchbruch im Spannkörper kann dieser Durchmesser des Spannkörpers verringert werden, so dass sich der Spannkörper an den Außenumfang der beiden Zylinderteile anpresst. Durch die erfindungsgemäß vorgesehenen Vorsprünge und Ausnehmungen, welche vorzugsweise ringartig ausgebildet sind, wird eine sehr gute kraft- und formschlüssige Verbindung zwischen den beiden Zylinderteilen erreicht. Hierzu ist lediglich die Spanneinrichtung am Ringdurchbruch des Spannkörpers zu betätigen, was mit relativ geringen Kräften und sehr schnell von Hand möglich ist.

Eine besonders bevorzugte Ausführungsform der Erfindung besteht darin, dass die Vorsprünge und/oder Ausnehmungen am Spannkörper Keilflanken aufweisen, die zum Erzeugen einer Anpresskraft an der Stoßstelle beim Spannen des Spannkörpers mit entsprechenden Keilflanken der Ausnehmungen bzw. Vorsprünge an den Zylinderteilen zusammenwirken. Die Vorsprünge und/oder Ausnehmungen dienen somit nicht einfach zur Erzeugung einer Formschlussverbindung. Vielmehr wird durch die Keilflächen, welche schräg zur Längsachse der Zylinderteile bzw. des Spannkörpers angeordnet sind, die radial gerichtete Spannkraft des Spannkörpers in axiale Anpresskräfte zur Stoßstelle hin umgewandelt. Mit der erfindungsgemäßen Verbindungseinrichtung ist somit eine Verbindung erreicht, bei der ähnlich einer Flanschverbindung axiale Anpresskräfte auf die Stirnseiten der zu verbindenden Zylinderteile an der Stoßstelle ausgeübt werden können.

Abhängig vom Anwendungsfall können die Vorsprünge und Ausnehmungen und damit deren Keilflanken beliebig im Querschnitt geradlinig oder kurvenförmig ausgebildet sein. Besonders vorteilhaft ist es nach der Erfindung, dass ein Querschnitt der Vorsprünge und/oder Ausnehmungen teilkreisförmig oder trapezförmig ausgebildet sind. Diese Formen sind fertigungstechnisch günstig und erlauben die Erzeugung hoher axialer Anpresskräfte. Erfindungsgemäß sind die Keilflanken der Vorsprünge oder Ausnehmungen an dem Spannkörper so angeordnet, dass die Keilflanken zur Stoßstelle hin gerichtet sind. Durch die Keilflanken wird die radial gerichtete Spannkraft so umgesetzt, dass die beiden auf Stoß aneinander liegenden Zylinderteile axial gegeneinander gedrückt werden.

Grundsätzlich kann der Spannkörper einteilig aus einem elastisch verformbaren Metall gefertigt sein. Gemäß der Erfindung ist der Spannkörper aus zwei Ringsegmenten aufgebaut, welche über ein Gelenk schwenkbar zueinander gelagert sind. Hierdurch können besonders stabile Ringsegmente verwendet werden, mit welchen entsprechend hohe Spannkräfte aufgebracht werden können. Zudem wird das Öffnen und Schließen vereinfacht, wobei die Teilung des Spannkörpers auch nur einen sehr geringen Bauraum benötigt. Selbstverständlich kann der Spannkörper auch aus mehr als zwei Ringsegmenten aufgebaut sein.

Eine leichte Handhabung der Verbindungsvorrichtung wird nach der Erfindung dadurch erreicht, dass das Gelenk über eine Halterung an einem Zylinderteil angebracht ist. Dies erleichtert insbesondere bei häufigem Öffnen und Schließen der Verbindungsvorrichtung die Handhabungsvorgänge. Das Gelenk kann als einfaches Drehgelenk ausgebildet sein und einen gemeinsamen Schwenkbolzen für die Ringsegmente oder separate Schwenkbolzen für jedes Ringsegment aufweisen.

Grundsätzlich kann für die Spanneinrichtung der Verbindungsvorrichtung jede geeignete Anordnung vorgesehen werden, mit welcher eine Spannkraft in Umfangsrichtung auf die beiden Ringsegmente ausgeübt werden kann. Eine besonders einfach zu handhabende und kostengünstige Ausführungsform besteht erfindungsgemäß darin, dass die Spanneinrichtung eine Schraubverbindung aufweist. Eine Schraubverbindung kann in einfacher Weise von Hand durch übliche Werkzeuge angezogen und gelöst werden.

Erfindungsgemäß ist vorgesehen, dass an der Stoßstelle der beiden Zylinderteile eine Dichtung angeordnet ist. Die Dichtung kann eine Flachdichtung oder eine Flüssigdichtung sein. Die Dichtung kann aus Metall, Gummi, Kunststoff oder einem anderen geeigneten Dichtungsmaterial ausgebildet sein. Besonders bevorzugt ist es nach der Erfindung, dass es sich bei der Dichtung um eine O-Ring-Dichtung handelt, welche in einer entsprechenden Aufnahmenut an der Stoßseite eines Zylinderteiles angeordnet ist.

Die beiden Zylinderteile weisen vorzugsweise einen gleichen Außendurchmesser auf und die Stirnseiten beider Zylinderteile an der Stoßstelle sind plan gearbeitet. Allerdings kann der Außendurchmesser der Zylinder auch abweichen, wobei dann der Spannkörper in entsprechender Weise einen Ringabsatz zur Anpassung an den unterschiedlichen Durchmesser aufweist. Auch können die Stirnseiten der Zylinderteile gestuft, konisch oder mit einer beliebigen Kurvenform versehen sein, sofern die beiden gegenüberliegenden Zylinderteile mit ihren angrenzenden Stirnseiten mit flächigem Kontakt aneinander liegen.

Nach der Erfindung ist ein Gehäuse mit einem ersten zylindrischen Gehäuseteil und einem zweiten zylindrischen Gehäuseteil vorgesehen, welches dadurch gekennzeichnet ist, dass die vorgeschriebene Verbindungsvorrichtung zum Verbinden der beiden Gehäuseteile angeordnet ist. Dabei ist erfindungsgemäß, dass das Gehäuse Teil einer Pumpvorrichtung ist.

Insbesondere bei Pumpvorrichtungen, welche sowohl einen Verdrängerkolben oder einen Plunger aufweisen können, werden feststoffhaltige und/oder abrasive und/oder aushärtende Medien gefördert, wobei das Problem besteht, dass sich die im Fördermedium enthaltenen Feststoffe in den Totzonen des Pumpenzylinders absetzen und aushärten. Da derartige Materialrückstände häufig zu mechanischen und verfahrenstechnischen Problemen führen, ist es daher erforderlich, diese Rückstände in regelmäßigen Zeitabständen aus dem Pumpenzylinder zu entfernen.

Mit der erfindungsgemäßen Anordnung kann das Gehäuse für den Pumpenzylinder ohne Weiteres von einer Gehäusebasis mit zylindrischem Stutzen entfernt werden. Dies erlaubt eine einfache und zuverlässige Reinigung des Pumpenzylinders. Für eine lösbare Verbindung dieser beiden Teile eines Pumpengehäuses ist die erfindungsgemäße Verbindungsvorrichtung besonders geeignet. Denn in einem Pumpengehäuse entstehen sehr große Kräfte, die an einer möglichen Trenn- oder Stoßstelle zweier Gehäuseteile auf die Verbindungseinrichtung wirken. Da diese Kräfte in einem Pumpengehäuse dynamisch wirken, ist die erfindungsgemäße Verbindungsvorrichtung besonders vorteilhaft, da mit dieser gezielt axiale Anpresskräfte an der Verbindungsstelle aufgebracht werden können. Diese axialen Anpresskräfte durch die Verbindungsvorrichtung können den dynamischen Belastungen an der Trenn- oder Stoßstelle entgegenwirken.

Die Erfindung wird nachfolgend anhand eines bevorzugten Ausführungsbeispiels weiter erläutert, welches in den Zeichnungen dargestellt ist. In den Zeichnungen zeigen:
- Fig. 1: eine schematische Querschnittsansicht durch ein Pumpengehäuse mit der erfindungsgemäßen Verbindungsvorrichtung und
- Fig. 2: eine Draufsicht auf die Anordnung von Fig. 1.

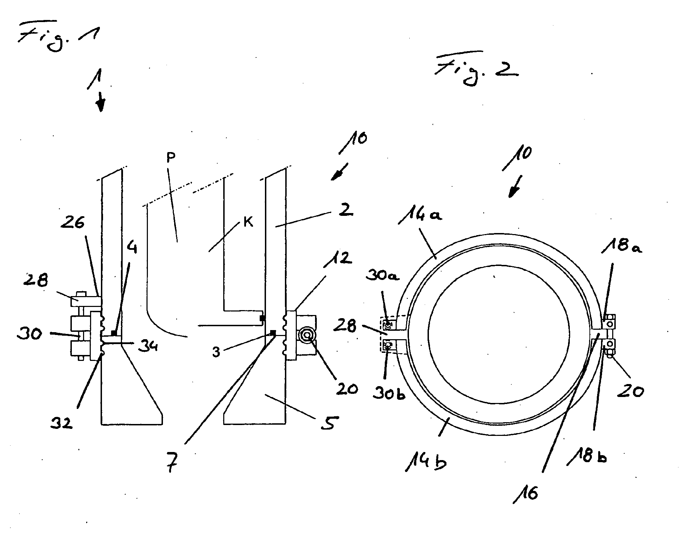

Fig. 1 zeigt ein Gehäuse 1 einer Pumpenvorrichtung, in welchem schematisch ein Verdrängerkolben K und ein alternativ möglicher Tauchkolben P angedeutet sind. Das Gehäuse 1 weist einen Pumpenzylinder als erstes Zylinderteil 2 und eine zylindrische Gehäusebasis als zweites Zylinderteil 5 auf, welche an einer Stoßstelle 7 mit ihren Stirnseiten auf Stoß aneinander liegen. Entlang der Stoßstelle 7 ist in der Stirnseite des ersten Zylinderteils 2 eine Ringnut 4 eingebracht, in welche eine O-Ring-Dichtung 3 eingelegt ist.

Zum lösbaren Verbinden des ersten Zylinderteils 2 und zweiten Zylinderteils 5 ist entlang der Stoßstelle 7 am Außenumfang eine erfindungsgemäße Verbindungsvorrichtung 10 angeordnet.

Wie auch im Zusammenhang mit Fig. 2 hervorgeht, weist die Verbindungsvorrichtung 10 einen ringförmigen Spannkörper 12 auf, welcher aus einem ersten Ringsegment 14a und einem zweiten Ringsegment 14b gebildet ist. Die beiden etwa halbkreisförmig gebildeten Ringsegmente 14a, 14b sind an den Durchmesser der beiden Zylinderteile 2, 5 angepasst. An ihrem einen Ende sind die beiden Ringsegmente 14a, 14b über ein Gelenk 26 an dem oberen ersten Zylinderteil 2 gehaltert. Hierzu weist das Gelenk 26 eine plattenförmige Halterung 28 auf, die an der Außenseite des ersten Zylinderteils 2 befestigt ist. Von der Halterung 28 ragen zwei Schwenkbolzen 30a, 30b nach unten vor, wobei die Ringsegmente 14a, 14b jeweils über eine Halteauskragung schwenkbar am Schwenkbolzen 30a bzw. dem Schwenkbolzen 30b gelagert sind.

Am anderen freien Ende der Ringsegmente 14a, 14b sind jeweils Auskragungen 18a, 18b ausgebildet, welche im Bereich eines Ringdurchbruches 16 im Spannkörper 12 eine Spanneinrichtung 20 aufnehmen. Die Spanneinrichtung 20 ist im dargestellten Ausführungsbeispiel eine Schraubverbindung mit einem Schraubbolzen, der mit einer Schraubmutter zum Verengen des Durchmessers des Spannkörpers 12 und damit zum Aufbringen einer radialen Anpresskraft an die Zylinderteile 2, 5 mit einer Schraubmutter in Wirkverbindung steht. Die Schraubverbindung kann durch einfache Betätigung mittels Schraubenschlüssel zugezogen oder geöffnet werden.

An der Ringinnenseite des Ringsegmente 14a, 14b sind je vier teilringförmige Vorsprünge 32 ausgebildet, welche im Querschnitt eine Halbkreisform besitzen. Entsprechend der Anzahl und Anordnung der Vorsprünge 32, welche spiegelsymmetrisch zur Stoßstelle 7 an dem Spannkörper 12 gebildet sind, sind korrespondierende Ausnehmungen 34 in den angrenzenden Endbereichen der beiden Zylinderteile 2, 5 ausgebildet. Die Anordnung der Vorsprünge 32 und Ausnehmungen 34 ist so aufeinander abgestimmt, dass deren schräge Flächen als Keilflächen dienen, mit welchen die radiale Spannkraft des Spannkörpers 12 in den beiden Zylinderteilen 2, 5 in Axialkräfte umgesetzt werden, welche zur Stoßstelle 7 hingerichtet ist. Hierdurch schafft die erfindungsgemäße Verbindungsvorrichtung 10 eine zuverlässige Verbindung der beiden Zylinderteile 2, 5, wobei die beiden Zylinderteile 2, 5 mit hoher Kraft axial gegeneinander gedrückt werden.

Die erfindungsgemäße Verbindungsvorrichtung 10 ist damit besonders geeignet, an einem Gehäuse 1 einer Pumpenvorrichtung die dynamisch auftretenden hohen Kräfte im Bereich der Trennfuge an der Stoßstelle 7 aufzunehmen und zu kompensieren.

## Patentansprüche

1. Pumpvorrichtung zum Pumpen eines feststoffhaltigen, aushärtenden Mediums, mit einem Gehäuse (1), in dem ein Verdrängerkolben (K) oder ein Tauchkolben (P) zum Fördern des Mediums angeordnet ist,
wobei
- das Gehäuse (1) als erstes Gehäuseteil (2) einen Pumpenzylinder, in dem der Verdrängerkolben (K) bzw. der Tauchkolben (P) angeordnet ist, und ein zweites Gehäuseteil (5) aufweist, welches als Gehäusebasis mit einem zylindrischen Stutzen ausgebildet ist, an welchem der Pumpenzylinder auf Stoß anliegt,
- zum Reinigen des Pumpenzylinders dieser von dem zylindrischen Stutzen entfernbar ist,
- eine Verbindungseinrichtung (10) zum lösbaren Verbinden des Pumpenzylinders mit der Gehäusebasis vorgesehen ist,
- die Verbindungseinrichtung (10) einen ringförmigen Spannkörper (12), welcher aus zwei Ringsegmenten (14a, 14b) aufgebaut ist, und mindestens eine Spanneinrichtung (20) aufweist, welche an einem Ringdurchbruch (16) des Spannkörpers (12) zum Verspannen des ringförmigen Spannkörpers (12) in Umfangsrichtung angeordnet ist,
- der Spannkörper (12) eine axiale Breite aufweist, mit der sich der Spannkörper (12) über die Stoßstelle (7) hinweg auf beide Gehäuseteile (2, 5) erstreckt,
- an einer Innenseite des ringförmigen Spannkörpers (12) Vorsprünge (32) und/oder Ausnehmungen ausgebildet sind, welche zum Eingreifen in korrespondierende Ausnehmungen (34) bzw. Vorsprünge an den Gehäuseteilen (2, 5) ausgebildet sind,
- die zwei Ringsegmente (14a, 14b) des Spannkörpers (12) über ein Gelenk (26) schwenkbar zueinander gelagert sind, und
- das Gelenk (26) über eine Halterung (28) an einem Gehäuseteil (2) angebracht ist.

2. Pumpvorrichtung nach Anspruch 1,
**dadurch gekennzeichnet,**
**dass** die Vorsprünge (32) und/oder die Ausnehmungen am Spannkörper (12) Keilflanken aufweisen, die zum Erzeugen einer Anpresskraft an der Stoßstelle (7) beim Spannen des Spannkörpers (12) mit entsprechenden Keilflanken der Ausnehmungen (34) bzw. Vorsprünge an den Gehäuseteilen (2, 5) zusammenwirken.

3. Pumpvorrichtung nach einem der Ansprüche 1 oder 2,
**dadurch gekennzeichnet,**
**dass** ein Querschnitt der Vorsprünge (32) und/oder Ausnehmungen (34) teilkreisförmig ausgebildet ist.

4. Pumpvorrichtung nach einem der Ansprüche 1 oder 2,
**dadurch gekennzeichnet,**
**dass** ein Querschnitt der Vorsprünge (32) und/oder Ausnehmungen (34) trapezförmig ausgebildet ist.

5. Pumpvorrichtung nach einem der Ansprüche 1 bis 4,
**dadurch gekennzeichnet,**
**dass** die Spanneinrichtung (20) eine Schraubverbindung aufweist.

6. Pumpvorrichtung nach einem der Ansprüche 1 bis 5,
**dadurch gekennzeichnet,**
**dass** an der Stoßstelle (7) der beiden Gehäuseteile (2, 5) eine Dichtung (3) angeordnet ist.

## Claims

1. Pump device for pumping a solids-containing, hardening medium, comprising a housing (1), in which a displacement piston (K) or a plunger piston (P) for delivering the medium is arranged,
whereby
- the housing (1) has as first housing part (2) a pump cylinder, in which the displacement piston (K) or the plunger piston (P) is arranged, and a second housing part (5), which is designed as a housing base with a cylindrical socket against which the pump cylinder rests in an abutting manner,
- for cleaning the pump cylinder this can be removed from the cylindrical socket,
- a connecting means (10) for detachably connecting the pump cylinder to the housing base is provided,
- the connecting means (10) has a ring-shaped clamping body (12), which is composed of two ring segments (14a, 14b), and at least one clamping means (20), which is arranged on a ring break-through (16) of the clamping body (12) for clamping the ring-shaped clamping body (12) in the circumferential direction,
- the clamping body (12) has an axial width, with which the clamping body (12) extends over the joint (7) onto both housing parts (2, 5),
- on an inner side of the ring-shaped clamping body (12) projections (32) and/or recesses are designed, which are designed for engagement into corresponding recesses (34) or projections on the housing parts (2, 5),
- the two ring segments (14a, 14b) of the clamping body (12) are pivotably supported with respect to each other via a hinge (26), and
- the hinge (26) is fixed via a holder (28) on a housing part (2).

2. Pump device according to claim 1,
**characterized in that**
the projections (32) and/or the recesses on the clamping body (12) have wedge flanks which interact during clamping of the clamping body (12) with corresponding wedge flanks of the recesses (34) or projections on the housing parts (2, 5) in order to generate a contact pressing force at the joint (7).

3. Pump device according to any one of claims 1 or 2,
**characterized in that**
a cross-section of the projections (32) and/or recesses (34) is designed in a partially circular manner.

4. Pump device according to any one of claims 1 or 2,
**characterized in that**
a cross-section of the projections (32) and/or recesses (34) is designed in a trapezoidal manner.

5. Pump device according to any one of claims 1 to 4,
**characterized in that**
the clamping means (20) has a screw connection.

6. Pump device according to any one of claims 1 to 5,
**characterized in that**
at the joint (7) of the two housing parts (2, 5) a sealing (3) is arranged.

## Revendications

1. Dispositif de pompage pour pomper un milieu durcissant contenant des matières solides, avec un boîtier (1) dans lequel est placé un piston de refoulement (K) ou un piston plongeur (P) pour transporter le milieu,
dans lequel
- le boîtier (1) comprend, comme première partie (2) de boîtier, un cylindre de pompe dans lequel est placé le piston de refoulement (K) ou le piston plongeur (P), et une deuxième partie (5) de boîtier qui est conformée en base de boîtier avec un embout cylindrique, contre lequel le cylindre de pompe se place en appui,
- pour le nettoyage du cylindre de pompe, celui-ci peut être retiré de l'embout cylindrique,
- un dispositif de jonction (10) est prévu pour relier de manière amovible le cylindre de pompe à la base de boîtier,
- le dispositif de jonction (10) comprend un corps de serrage annulaire (12) qui est constitué de deux segments annulaires (14a, 14b), ainsi qu'au moins un dispositif de serrage (20) qui est placé sur une traversée annulaire (16) du corps de serrage (12) pour serrer le corps de serrage annulaire (12) dans la direction circonférentielle,
- le corps de serrage (12) présente une largeur axiale avec laquelle le corps de serrage (12) s'étend sur les deux parties (2, 5) de boîtier au-delà de la zone de jonction (7),
- sur la face intérieure du corps de serrage annulaire (12) sont formé(e)s des saillies (32) et/ou des évidements, qui sont conformé(e)s pour s'engager dans des évidements (34) ou des saillies correspondant(e)s sur les parties (2, 5) de boîtier,
- les deux segments annulaires (14a, 14b) du corps de serrage (12) sont montés pivotants l'un par rapport à l'autre par l'intermédiaire d'une articulation (26), et
- l'articulation (26) est placée sur une partie (2) de boîtier par l'intermédiaire d'une fixation (28).

2. Dispositif de pompage selon la revendication 1,
***caractérisé en ce que*** les saillies (32) et/ou les évidements sur le corps de serrage (12) comprennent des flancs de coincement qui, pour produire une force de pressage au niveau de la zone de jonction (7) lors du serrage du corps de serrage (12), coopèrent avec des flancs de coincement correspondants des évidements (34) ou des saillies sur les parties (2, 5) de boîtier.

3. Dispositif de pompage selon l'une quelconque des revendications 1 ou 2,
***caractérisé en ce qu*'**une section transversale des saillies (32) et/ou des évidements (34) est réalisée en forme d'arc de cercle.

4. Dispositif de pompage selon l'une quelconque des revendications 1 ou 2,
***caractérisé en ce qu*'**une section transversale des saillies (32) et/ou des évidements (34) est réalisée trapézoïdale.

5. Dispositif de pompage selon l'une quelconque des revendications 1 à 4,
***caractérisé en ce que*** le dispositif de serrage (20) comprend une liaison vissée.

6. Dispositif de pompage selon l'une quelconque des revendications 1 à 5,
***caractérisé en ce qu*'**un joint (3) est placé au niveau de la zone de jonction (7) des deux parties (2, 5) de boîtier.
